# EUROPEAN PATENT APPLICATION

(11) **EP 2 223 740 A2**
(43) Date of publication of application: **01.09.2010**
(21) Application number: 10153240.6
(22) Date of filing: 10.02.2010
(51) Int. Cl.: B01J 19/00

(54) **Chemical apparatus**

(30) Priority: 10.02.2009 JP 2009028075
(71) Applicant: Hitachi Plant Technologies, Ltd., Toshima-ku Tokyo 170-8466 (JP)
(72) Inventor: Saito, Kimio, Tokyo 170-8466 (JP); Endo, Yoshishige, Tokyo 170-8466 (JP); Kato, Hajime, Tokyo 170-8466 (JP); Ito, Yuzuru, Tokyo 170-8466 (JP); Mori, Syuuichi, Tokyo 170-8466 (JP)
(74) Representative: Beetz & Partner

(57) **Abstract**

In a chemical apparatus, for enabling to remove a gas within a pipe, with efficiency, thereby to conduct mixing or reaction or emulsification with stability, a dividing portion (1, 2) is provided for removing the gas within the pipe when supplying an undiluted liquid, from a condition that no liquid is supplied into an undiluted liquid pipe and micro-reactors (31a, 31n), to reduce the gas to be transferred to the micro-reactors, and thereby to remove the gas within the pipe, easily, and further the pipes disposed from the undiluted liquid pump (3, 4) up to the micro-reactors (31a, 31n) are inclined to direct upward, to as to remove the gas in the pipes; whereby achieving stable mixing or reaction or emulsification.

## Description

This application relates to and claims priority from Japanese Patent Application No. 2009-028075 filed on February 10, 2009, the entire disclosure of which is incorporated herein by reference.

### BACKGROUND OF THE INVENTION

The present invention relates to a chemical apparatus with applying a reactor using minute channels therein (hereinafter, being called "a micro-reactor"), and in particular, it relates to a chemical apparatus having a gas removal function for removing a gas, lowering an efficiency of mixture, reaction and emulsification thereof, out of an inside of a system.

In recent years, reaches or developments are made, extensively, for applying the merits of the micro-machining technology, i.e., scale effects obtainable under a miniature scale, into a chemical process, aggressively. As one of them, there can be listed up an easiness of scaling-up of a processing volume.

Normally, in the reaches/developments of a chemical product, a volume of production is gradually scaled up a mass-production plant, starting from a reach on a laboratory level, passing through a development of a product and a test plant thereof, for example. In general, because of differences in various conditions for carrying out the chemical reaction, between a chemical reaction for a small volume, which is conducted on the laboratory level, such as, by means of a beaker experiment, etc., and a chemical reaction for a large volume within a reactor tank for use of production, then technical problems are often generated, for achieving the scaling-up from the laboratory level to the mass-production level. With the micro-reactor, for avoiding such problems, as far as possible, a strategy is proposed, i.e., installing the micro-reactor as it is, which is developed/applied on the laboratory level for processing a small volume, but by a plural number thereof, thereby to obtain a necessary volume of the mass-production level. This technology of scaling up for use in the processing, i.e., increasing the processing volume with installation of a plural number of a single body of the micro-reactor, the processing volume thereof being small by each one, for example, it is called by "numbering-up", sometimes.

With this numbering-up, however an original or inherent scale effect cannot be obtained, when a gas of a pipe remains within the micro-reactor, in an initial operation for supplying an undiluted solution, from a condition that the solution is not yet supplied into an undiluted solution pipe and the micro-reactor (hereinafter, being called, "initial condition"), and therefore quality of the product is lowered down. For this reason, it is important to remove the gas within the pipe, for not remaining the gas within the micro-reactor.

### <Prior Art Documents>

### <Patent Documents>

[Patent Document 1] Japanese Patent Laying-Open No. 2008-080306 (2008).

### BRIEF SUMMARY OF THE INVENTION

In scaling-up from the laboratory level up to a plant level with applying the numbering-up therein, as is disclosed in the Patent Document 1 mentioned above, a method for working out a number of installation of micro-reactors in parallel with is applies, frequently. The maximum merit of this pipe parallel connection lies in an aspect of suppressing a cost of a liquid supply facility since a raw material can be divided from one (1) supply means (i.e., a pump, or a header tank); however, a demerit thereof lies in that, in particular, when a minute or micro channel after the division thereof is clogged because of adhesion/residual of bubbles due to influences of a capillary effect, or deposit of reactants on a channel wall within the micro-reactor, etc., the influences of unbalancing in the resistance of channels affect to all of dividing channels other than that, and therefore an initial liquid-supply volume to each of the micro-reactors is disturbed. Also, a replacement failure, generating when it is replaced by the raw material in an initial operation, i.e., residual a gaseous phase, it is high in uncertainty when that bubbles separate and flow down into a stage thereafter; therefore, it can be a cause of reason of lowering performances of a chemical operation within a minute or micro space within the micro-reactor.

As a one of means for dissolving the problems, such as, deposit of the reactant on the channel wall within the micro-reactor, etc., in the Patent Document 1 mentioned above, for example, there is disclosed a method for maintaining a raw material flowing in each channel, while monitoring the condition of supplying the liquid of the raw material flowing in each channel, and then upon basis of that information, by controlling a valve or a liquid supply means. With this method, a gas residing within the pipe, from the pump for supplying the raw material therefrom up to the valve, is transferred into the micro-reactor, in an initial operation thereof, so as to push out the gas, and therefore there is a problem that the gas remain can easily remain within the pipe. Also, the bubbles in the pipe has a density, being smaller than that of the liquid, they can easily come out in the above; however, no inclination is provided on the pipe, connecting from the pump to the micro-reactor, so as to direct it into an upper direction, there is also a problem that for the bubbles within the pipe, it is difficult to come out therefrom.

According to the present invention, for dissolving such problems mentioned above, there is provided a chemical apparatus, comprising: plural numbers of undiluted liquid tanks, each of which is configured to reserve an undiluted liquid therein; micro-reactors, each being a container, which are configured to mix or react or emulsify said plural numbers of undiluted liquids; pumps, which is configured to supply said undiluted liquids into said micro-reactors; dividing portions, which are configure to distribute said undiluted liquids into said micro-reactors; and a product tank which is configured to accumulate therein liquids produced in said micro-reactors, and pipes, which are configured to connect with said micro-reactors, respectively, wherein each of said dividing portions is a container, to which pipes from said pump and pipes to said micro-reactors are connected, and further comprising a pipe for turning said undiluted liquid back to said undiluted liquid tank is provided onto said dividing portion, in an upper portion than the pipe for supplying said undiluted liquid thereof, and wherein height of the pipes of said dividing portion for distributing said undiluted liquid to said micro-reactors is lower than that of the pipe for turning it back to said undiluted liquid tank, and a valve is provided on the pipe for turning it back to said undiluted liquid tank.

Thus, in the chemical apparatus mentioned above, with connecting the pipe for distributing the undiluted liquid to the micro-reactors in an upper portion than an undiluted liquid supply pipe of the dividing portion, and also in a lower portion than the pipe for returning to the undiluted liquid, it is possible to remove the gas within the pipe, and to lower the volume of the gas, which is sent to the micro-reactor, and thereby providing the chemical apparatus for conduct mixing or reaction or emulsification with efficiency.

Also, according to the present invention, in the chemical apparatus as described in the above, the pipes are so disposed that they have an upward inclination, always, from said dividing portion to the micro-reactors. With such the chemical apparatus, because of disposition of the pipes to have upward inclination, always from the dividing portion up to the micro-reactors, due to a difference of density between the liquid and the gas, since the gas (i.e., bubbles), being small in density within the pipe, flows out into a downstream of the micro-reactors, and therefore the gas within the pipe can be removed therefrom.

Also, within the chemical apparatus as described in the above, said valve is made up with an electromagnetic valve, and a gas detector is provided between said electromagnetic valve and said undiluted liquid tank, and further is provided a controller portion for controlling said electromagnetic valve upon basis of an output of said gas detector. With such the chemical apparatus, since the electromagnetic valves and the gas detectors are controlled, automatically, it is possible to remove the gas, automatically, without help by manpower, and therefore a gas removal operation can be finished, as soon as possible, when mixing of the gas disappears in the undiluted liquid.

Further, within the chemical apparatus as described in the above, flow-rate detector portions are disposed between said dividing portion and said micro-reactors, and is provided a controller portion for controlling said electromagnetic valve upon basis of outputs from said flow-rate detector portions. With such the chemical apparatus, because of provision of the electromagnetic valve and the flow-rate detector portion between the dividing portion and the micro-reactors, and of control of the electromagnetic valve upon basis of the output from the flow-rate detector portion, a necessary flow-rate can be supplied to the micro-reactors, and thereby obtaining a product having good quality.

In addition thereto, according to the present invention, in the chemical apparatus as described in the above, a relationship between a signal from said flow-rate detector portion and an actual flow-rate, in advance, and a value corresponding to necessary flow-rate from this relationship is memorized in said controller portion. With such the chemical apparatus, since the value corresponding to the necessary flow-rate for mixing or reaction or emulsification is memorized, in advance, then it is possible to bring an initial opening of that electromagnetic valve at an optimal opening when it operates, and thereby obtaining a product having good quality.

According to the present invention, the gas within the pipes can be removed, with high efficiency, and therefore it is possible to control the necessary flow-rate for mixing or reaction or emulsification, as well as, avoiding the problems of the conventional arts, such as, adhesion or residual of the gas (i.e., the bubbles) onto the channel wall, frequently generating on a parallel dividing pipe portion, therefore it is possible to provide the chemical apparatus for enabling to obtain the product of high quality, with high efficiency.

### BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:
Fig. 1 is a view for showing the entire configuration of a chemical apparatus, according to a first embodiment (an embodiment 1) of the present invention;
Fig. 2 is a view for showing the entire configuration of a chemical apparatus, according to a second embodiment (an embodiment 2) of the present invention;
Fig. 3 is a view for showing the entire configuration of a chemical apparatus, according to a third embodiment (an embodiment 3) of the present invention; and
Fig. 4 is a view for showing the details of a diving according to the present invention.

### DETAILED DESCRIPTION OF THE PREFERRED EMBODIMENTS

Hereinafter, explanation will be fully made on chemical apparatus, according to the present invention, by referring to the drawings attached herewith.

### <Embodiment 1>

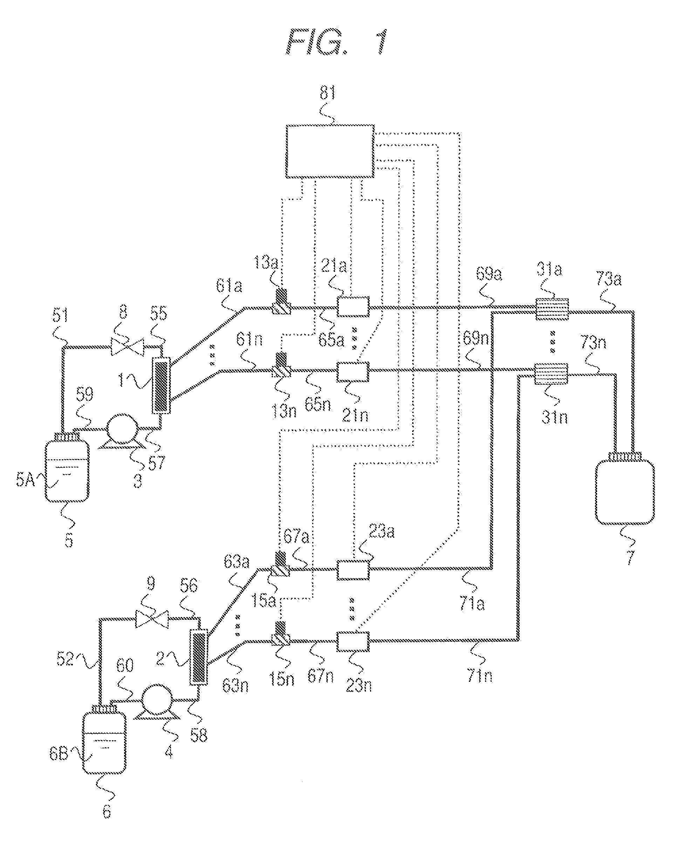

Fig. 1 briefly shows the entire configuration of an example of a chemical apparatus for conducting an emulsification, according to a first embodiment (i.e., an embodiment 1) of the present invention. In this Fig. 1, in an undiluted liquid tank 5 is accumulated an emulsification raw material 5A. Thus, the structure is made in such a manner that, the emulsification raw material 5A in this undiluted liquid tank 5, passing through a pipe 59, is supplied by an undiluted liquid pump 3, to a pipe 57 and a lower portion of a dividing portion 1. To the dividing portion 1, other than that, are connected a plural number of pipes, as well as, a pipe 61a connecting to a micro-reactor 31a. Further, in an upper part of the dividing portion 1 is provided a valve 8 through a pipe 55, and further other pipe is so provided that it connects with the pipe 51 and turns back to the undiluted liquid tank 5.

A pipe 61a, i.e., one of a plural number of pipes continuing from the dividing part 1 to the micro-reactors 31a to 31n, is connected, through an electromagnetic valve 13a, to a pipe 65a and a flow-rate detector portion 21a, and through a pipe 69a, it is connected to one inlet of the micro-reactor 31a. Other pipes continuing from the dividing portion 1 to the micro-reactor 31n are also similar to those as mentioned above.

An emulsification raw material 5B in an undiluted liquid tank 6 is supplied from an undiluted liquid pump 4, through a pipe 60, to a pipe 58 and a lower portion of a dividing portion 2, in the structures thereof. To the dividing portion 2 are connected a plural number of pipes, continuing to the micro-reactors 31a to 31n thereafter. Further, in an upper part of the dividing portion 2 is provided a valve 9, through a pipe 56, and further a piping is so made that it connects with a pipe 52 and turns back to the undiluted liquid tank 6. A pipe 63a, i.e., one of the plural numbers of pipes continuing from the dividing portion 2 to the micro-reactors 31a to 31n, is connected, through an electromagnetic valve 15a, to a pipe 67a and a flow-rate detector portion 23a, and through a pipe 71a, it is connected to the other inlet of the micro-reactor 31a. Other pipes continuing from the dividing portion 2 to the micro-reactor 31n are also similar to those as mentioned above.

Next, explanation will be made on the operation of the chemical apparatus for conducting the emulsification, which is shown in Fig. 1 mentioned above.

First of all, explaining about an initial operation, the emulsification raw material 5A is thrown or inputted into the undiluted liquid tank 5, passing through the pipe 57 with driving of the undiluted liquid pump 3, and it is supplied to the dividing portion 1. In this instance, the valve 8 is in the condition of being opened. Also, at the same time, the electromagnetic valves 13a to 13n are in the condition of being closed. With setting up a supply flow-rate to such a degree, that no disturbance appears on a surface of the liquid passing through the dividing portion 1 and no gas is mixed in the undiluted liquid, the gas will not mix into an inside of the emulsification raw material 5A within the dividing portion 1. In more details, with a degree of the viscosity (i.e., 1 mPa·s) of water, it is possible to supply the emulsification raw material 5A, without mixing the gas into the emulsification raw material 5A, if setting a velocity of flow rate to 0.1 m/ s or lower than that. The emulsification raw material 5A being supplied into the dividing portion 1, thereafter, propagating from an upper portion of the dividing portion 1 to the pipe 55, and passing through the valve 8, turns from the pipe 51 back into the undiluted liquid tank 5. In case where the gas does not mix into the emulsification raw material 5A, which turns back into the undiluted liquid tank 5, it is possible to supply the emulsification raw material 5A mixing no gas therein to the micro-reactors 31a to 31n through the flow-rate detector portions 21a to 21n, by closing the valve 8 while opening the electromagnetic valves 13a to 13n. The emulsification raw material 5A is supplied into a product tank 7, and the undiluted liquid pump 3 is stopped when it is in the condition that no gas is mixed in the emulsification raw material 5A supplied into the product tank 7, and the electromagnetic valves 13a to 13n are closed.

Next, an emulsification raw material 6B is inputted into another undiluted liquid tank 6, and in the similar manner to the emulsification raw material 5A, the valve 9 is closed while closing the electromagnetic valves 15a to 15n, thereby filling up an inside of the dividing portion 2 with the emulsification raw material 6B, through driving of the undiluted liquid pump 4, and then the emulsification raw material 6B flows out from the pipe 52, and the valve 9 is closed when no gas is mixed in the emulsification. Thereafter, the electromagnetic valves 15a to 15n are opened, and thereby supplying the emulsification raw material 6B to the micro-reactors 31a to 31n, from the dividing portion 2 through the flow-rate detector portions 23a to 23n. Then, from the pipes 73a to 73n comes out a mixture of the emulsification raw material 6A and the emulsification raw material 6B and when no gas is mixed therein, the undiluted liquid pump 4 is stopped, and the electromagnetic valves 15a to 15n are closed; thereby finishing the initial operation. In this instance, since the liquid accumulating in the product tank 7 is not yet emulsified, there is necessity of separating them not to be mixed with the product obtained through the emulsification operation thereafter. Also, in this explanation, the operation of the pump 3 is separated from that of the pump 4, but the pumps may be operated, at the same time.

Next, explanation will be made on an emulsification operation. However, by the initial operation mentioned above, only the undiluted liquid is filled up in the pipe. Under this condition, with opening the electromagnetic valves 13a to 13n and 15a to 15n, the undiluted liquid pumps 3 and 4 are started to operate, and with transferring signals of the flow-rate detector portions 21a to 21n and 23a to 23n to a controller portion 81, the electromagnetic valves 13a to 13n and 15a to 15n are operated so that they come to predetermined values.

Herein, regarding the predetermined value by the controller portion 81, before conducting the initial operation is obtained relationships between the signals from the flow-rate detector portions 23a to 23n and the actual flow-rates, and from those relationships, values corresponding to the necessary flow-rate2 are memorized into the controller portion 81. With doing so, it is possible to adjust the flow-rate to the predetermined one. In this manner, the raw material, which is adjusted to a necessary flow-rate, is emulsified within the micro-reactors 31a to 31n, and is supplied from the pipes 73a to 73n into the product tank 7, thereby obtaining an emulsified product of good quality. By replacing the micro-reactors with those for use of mixing or reaction, it is possible to obtain the product having high performances, with the similar operation thereto, in the mixing or in the reaction.

### <Embodiment 2>

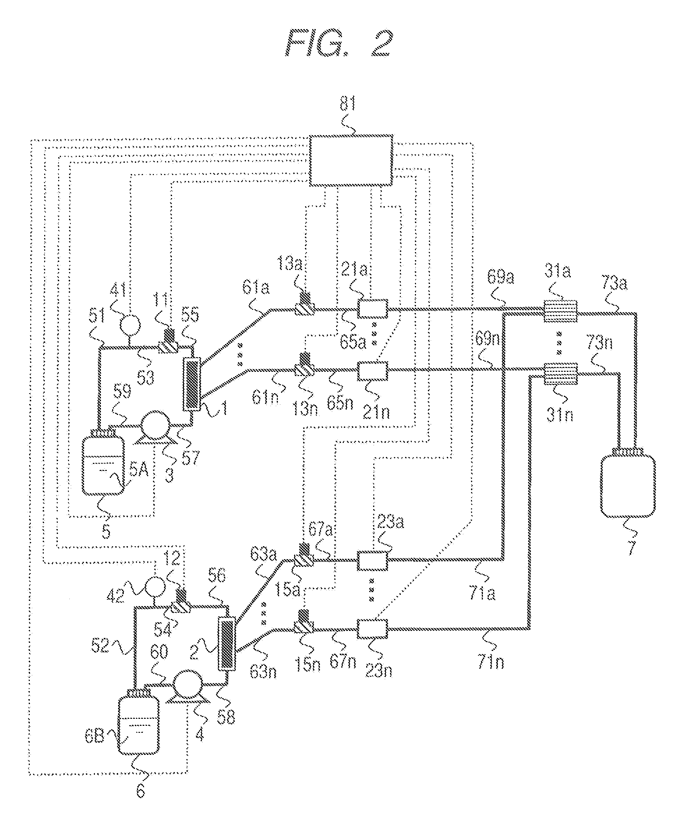

Fig. 2 shows therein the structures of a second embodiment (i.e., an embodiment 2) according to the present invention. In this Fig. 2, an aspect differing from that shown in Fig. 1 lies in that the valve 8, which is connected with the pipe 55 of the dividing portion 1 in Fig. 1, is made up with an electromagnetic valve 11, and that a bubble detector 41 is disposed in the pipe 53, which is connected to other end of the electromagnetic valve 11, while with other end of the bubble detector 41 is connected the pipe 51, which can supply the undiluted liquid into the undiluted liquid tank 5. In the similar manner, the valve 9, which is connected with the pipe 56 of the dividing portion 2, is made up with an electromagnetic valve 12, and that a bubble detector 42 is disposed in the pipe 54, which is connected to other end of the electromagnetic valve 12, while with other end of the bubble detector 42 is connected the pipe 52, which can supply the undiluted liquid into the undiluted liquid tank 6. From the bubble detectors 41 and 42 are transmitted condition information of bubbles in the emulsification raw materials 5A and 6B, to the controller portion 81. And, although the gas is mixed in a beginning of the initial operation, but when the bubbles disappear and there is only the emulsification raw material 5A or 6B, a signal is changed into that indicating there is no bubble therein. Upon receipt of this signal within the controller portion 81, the bubble detector 41 closes the electromagnetic valve 11, and the bubble detector 42 closes the electromagnetic valve 12. Doing in this way, it is possible to carry out the initial operation, automatically, but without help by manpower. Also, no bubble is mixed within the emulsification raw material 5A or 6B, since the initial operation can be stopped before the undiluted liquid flows out from the pipes 51 and 52, as soon as possible, it is possible to reduce the volumes of the emulsification raw materials 5A and 6B. However, bubble detection in the bubble detector 41 or 42 can be also achieved, for example, by a detector, determining the gas or the liquid due to difference of the refractive index between them, or a video analysis, etc.

### <Embodiment 3>

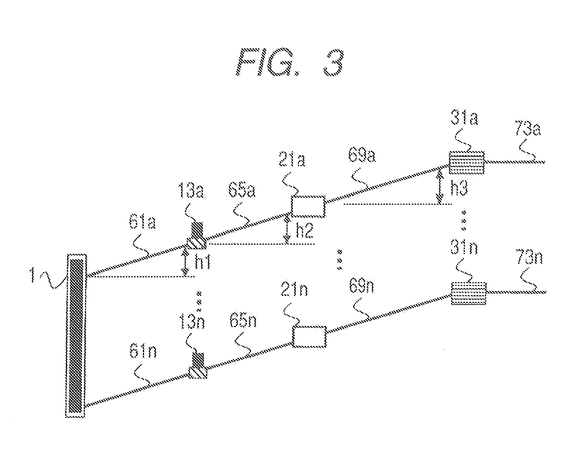

Fig. 3 shows the structures of a third embodiment (i.e., an embodiment 3) according to the present invention. This Fig. 3 shows therein the dividing portion 1, which is taken out from Fig. 1, and an aspect differing from that shown in Fig. 1 lies in that an inclination upward continues from a conjunction between the dividing portion 1 and the pipe 61a up to the electromagnetic valve 13a; being heighten by "h1" so that the gas hardly accumulate therein. Further, a portion from the juncture between the electromagnetic valve 13a and the pipe 65a up to the flow-rate detector portion 21a is also heighten by "h2", in the similar manner, and also a portion from the juncture between the flow-rate detector portion 21a and the pipe 69a up to the micro-reactor 31a is heighten by "h3". With doing this, because of the difference of density between the liquid and the gas, the gas (i.e., bubbles) being small in the density within the pipe goes out from the micro-reactor 31a, earlier, and therefore it is possible to shorten the time of the initial operation. This is effective, in particular, when the viscosity of the liquid is low, or when an inner diameter of the pipe is small. The higher the heights "h1", "h2" and "h3", the higher the effect thereof, but it is easy to remove the bubbles if it is equal to or more than 10 mm.

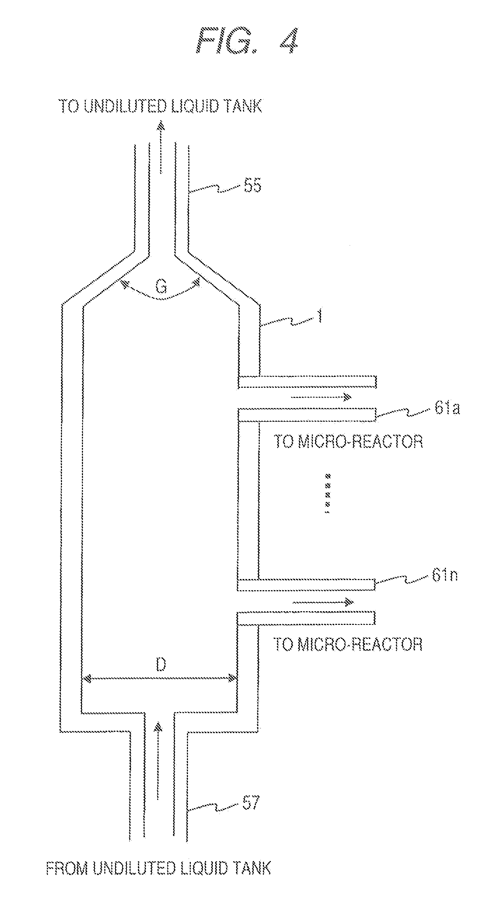

Fig. 4 is a view for showing the structure of the dividing portion. In this figure, the pipe 57 is connected onto a lower portion of the dividing portion 1, while the pipe 57 is connected onto an upper portion thereof. On a side surface of the dividing portion 1 are disposed the pipe 61a and plural numbers of pipes; i.e., being connected up to the n^{th} number of pipe 61n. A diameter "D" of the dividing portion 1 is so determined that a flow-rate therein is equal or lower than 0.1 m/ s. An upper portion within the dividing portion 1 is slowly tapered, gradually, up to the thickness of the pipe 55 in an upper portion, so that the gas within the dividing portion 1 can be easily removed therefrom. Preferably, this angle "G" is small, but the gas can be discharged, quickly, without staying within the dividing portion 1, if being equal to 170° or less than that. On the side surface of the dividing portion 1 are connected the pipes directing to the micro-reactors. In this manner, it has such the structure that the gas in the dividing portion 1 can hardly reach to the micro-reactors, since the pipes directing to the micro-reactors discharge the liquids in the horizontal direction, differing from the direction into which the gas directs. With adoption of such structure therein; i.e., achieving such structure that the gas in the pipe can be taken outside, and further the gas can hardly reach to the micro-reactors, it is possible to shorten the time of the initial operation and/or to reduce a volume of the liquid necessary for the initial operation, and thereby conducting the emulsification with high efficiency. Further, by replacing the micro-reactors with those for use of mixing or for use of reaction, it is possible to obtain the product having high performances, with the similar operation thereto, in the mixing or in the reaction. Also, thought an interior of the dividing portion shown herein is a column-like cavity; however, since it is enough that the flow rate or velocity is equal or lower than 1 m/s, then a similar effect can be also obtained by a polygonal cavity.

However, in the embodiments according to the present invention mentioned above, though there is shown the example to be applied into a process of a 2-liquids 1-step step, i.e., mixing, reacting and emulsifying two (2) kinds of liquids by one (1) time; however, the present invention should not be limited to this, but may be applied, effectively, into a process for mixing, reacting and emulsifying plural numbers of raw materials through plural numbers of steps.

Also, in the embodiments mentioned above, detailed description was made about only the initial operation, however in an actual process, the gas accumulate on a channel surface or a stagnating portion, gradually, depending on the raw material. Even in such case, with the operation of removing the gas in the pipe, periodically, during the operation, or the operation of adjusting a volume of supplying the liquid from the pump, by opening the valve of only a line, in which the bubbles block a flow therein, it is possible to push out the bubbles into a downstream.

The present invention may be embodied in other specific forms without departing from the spirit or essential feature or characteristics thereof. The present embodiment(s) is/are therefore to be considered in all respects as illustrative and not restrictive, the scope of the invention being indicated by the appended claims rather than by the forgoing description and range of equivalency of the claims are therefore to be embraces therein.

## Claims

1. A chemical apparatus, comprising:
plural numbers of undiluted liquid tanks (5, 6), each of which is configured to reserve an undiluted liquid (5A, 6B) therein;
micro-reactors (31a, 31n), each being a container, which are configured to mix or react or emulsify said plural numbers of undiluted liquids (5A, 6B);
pumps (3, 4), each of which is configured to supply said undiluted liquids (5A, 6B) into said micro-reactors (31a, 31n);
dividing portions (1, 2), which are configured to distribute said undiluted liquids (5A, 6B) into said micro-reactors (31a, 31n); and
a product tank (7) which is configured to accumulate therein liquids produced in said micro-reactors (31a, 31n), and pipes, which are configured to connect with said micro-reactors, respectively, wherein each of said dividing portions (1, 2) is a container, to which pipes (57, 58) from said pump (3, 4) and pipes (61a, 61n; 63a, 63n) to said micro-reactors (31a, 31n) are connected, and further comprising a pipe (55, 56) for turning said undiluted liquid (5A, 6B) back to said undiluted liquid tank (5, 6) is provided onto said dividing portion (1, 2), in an upper portion than the pipe for supplying said undiluted liquid thereof, and wherein height of the pipes (61a, 61n; 63a, 63n) of said dividing portion (1, 2) for distributing said undiluted liquid (5A, 6B) to said micro-reactors (31a, 31n) is lower than that of the pipe (55, 56) for turning it back to said undiluted liquid tank (5, 6), and a valve (8, 9) is provided on the pipe for turning it back to said undiluted liquid tank.

2. The chemical apparatus, as described in the claim 1, wherein the pipes (61a, 65a, 69a; 61n, 65n, 69n) are so disposed that they have an upward inclination, always, from said dividing portion (1) to the micro-reactors (31a, 31n).

3. The chemical apparatus, as described in the claim 1 or 2, wherein said valve is made up with an electromagnetic valve (11, 12), and a gas detector (41, 42) is provided between said electromagnetic valve (11, 12) and said undiluted liquid tank (5, 6), and further is provided a controller portion (81) for controlling said electromagnetic valve (11, 12) upon basis of an output of said gas detector (41, 42).

4. The chemical apparatus, as described in any of claims 1 to 3, wherein flow-rate detector portions (21a, 21n; 23a, 23n) are disposed between said dividing portion (1, 2) and said micro-reactors (31a, 31n), and a controller portion (81) is provided for controlling said electromagnetic valve upon basis of outputs from said flow-rate detector portions (21a, 21n; 23a; 23).

5. The chemical apparatus, as described in the claim 4, wherein a relationship between a signal from said flow-rate detector portion (21a, 21n; 23a, 23n) and an actual flow-rate, in advance, and a value corresponding to necessary flow-rate from this relationship is memorized in said controller portion (81).
